# EUROPEAN PATENT SPECIFICATION

(11) **EP 4 203 160 B1**
(45) Date of publication and mention of the grant of the patent: **30.04.2025**
(21) Application number: 21953776.8
(22) Date of filing: 19.08.2021
(51) Int. Cl.: H01M 50/30, H01M 50/35, H01M 50/10, H01M 50/147, H01M 50/148, H01M 50/342, H01M 50/375

(54) **BATTERY CELL, BATTERY, POWER CONSUMING DEVICE, AND METHOD FOR MANUFACTURING BATTERY CELL**
BATTERIEZELLE, BATTERIE, STROMVERBRAUCHENDE VORRICHTUNG UND VERFAHREN ZUR HERSTELLUNG EINER BATTERIEZELLE
CELLULE DE BATTERIE, BATTERIE, DISPOSITIF DE CONSOMMATION D'ÉNERGIE ET PROCÉDÉ DE FABRICATION DE CELLULE DE BATTERIE

(43) Date of publication of application: 28.06.2023
(73) Proprietor: Contemporary Amperex Technology (Hong Kong) Limited, Central, Central And Western District (HK)
(72) Inventor: MENG, Wanqiu, Ningde, Fujian 352100 (CN); LIU, Qian, Ningde, Fujian 352100 (CN); YE, Yonghuang, Ningde, Fujian 352100 (CN); LIU, Wenzhong, Ningde, Fujian 352100 (CN); ZHANG, Xiaoxi, Ningde, Fujian 352100 (CN); XUE, Longfei, Ningde, Fujian 352100 (CN)
(74) Representative: Frick, Robert
(86) International application number: PCT/CN2021/113643
(87) International publication number: WO 2023/019533

(56) References cited:
- CN-A- 112 310 552
- CN-U- 205 542 919
- CN-U- 205 645 893
- CN-U- 205 881 961
- CN-U- 212 182 380
- CN-U- 213 816 358
- CN-U- 213 816 358
- JP-A- 2017 073 195
- US-A- 5 362 577
- US-A1- 2012 015 218
- US-A1- 2020 227 715

## Description

### Technical Field

The present application relates to the technical field of batteries, and in particular to a battery cell, a battery, a power consuming device, and a method for manufacturing the battery cell.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

Batteries such as lithium-ion batteries have been widely used in electronic devices such as mobile phones and laptops due to their advantages of high energy density, environmental friendliness, etc. In recent years, in order to deal with environmental problems and issues of gasoline prices and energy storage, the application of lithium-ion batteries has been rapidly expanded to gasoline-electric hybrid vehicles, ships, energy storage systems, etc.

A battery generally comprises a plurality of battery cells. Each battery cell comprises a housing, an electrode assembly and an electrolyte solution which are accommodated in the housing, and a cap assembly connected to the housing. The electrode assembly comprises a positive electrode plate, a negative electrode plate, and a separator that separates the positive electrode plate from the negative electrode plate.In order to avoid leakage of the electrolyte solution, the housing is generally sealed by the cap assembly. However, the electrode assembly generates gas in charging and discharging processes. With accumulation of the gas, the pressure inside the housing continuously increases, which easily results in the risk of deformation of the battery and deterioration of the performance of the electrode assembly. In the prior art, housing structures of battery cells are disclosed, for example, in CN 213 816 358 U, US 2012/015218 A1, JP 2017-073195 A, US 5,362,577 A and CN 112 310 552 A.

### Summary of the Invention

In view of the above problems, the present application provides a battery cell, a battery, a power consuming device, and a method for manufacturing the battery cell. Gas inside a battery can be discharged to prevent the gas from accumulating inside the housing, thereby improving performance of an electrode assembly, prolonging service life of a secondary battery, and ensuring safety performance of the battery cell.

In a first aspect, the present application provides a battery cell, comprising a cover plate, a housing, and a gas-permeable film. The housing has an opening, and the cover plate covers the opening of the housing. The cover plate and/or housing have/has at least one through hole, and the inside and the outside of the battery cell are in communication with each other via the through hole; and the gas-permeable film is connected to the inside of the cover plate and/or housing and covers the at least one through hole. In this way, gas inside the battery cell can be discharged from the battery cell through the gas-permeable film, thereby reducing the risk of swelling or explosion of the battery cell; and the gas-permeable film can also prevent leakage of an electrolyte solution inside the battery cell and prevent external liquid from entering the battery cell. Moreover, since the gas-permeable film is connected to the inside of the cover plate or housing, an outward pressure is generated on the gas-permeable film 44 when the gas pressure inside the battery cell increases, so that the edge of the gas-permeable film is more closely connected to the cover plate or housing, and the gas-permeable film is less prone to being separated from the cover plate or housing.

The at least one through hole comprises an accommodating section and an extending section in a direction perpendicular to the plane of the cover plate or housing, the accommodating section having an average bore-diameter greater than the bore-diameter of the extending section, and the accommodating section being closer to the inside of the battery cell than the extending section; and the battery cell further comprises a backing material, the backing material being at least partially accommodated in the accommodating section. In this way, when the gas-permeable film tends to deform outward under the action of the gas pressure inside the battery cell, an internal wall of the through hole provides an additional support force to the backing material, which further increases the support force for the gas-permeable film, so that the gas-permeable film is less prone to deformation.

The backing material is made of a hydrophobic and gas-permeable material having a gas permeation volume greater than the gas permeation volume of the gas-permeable film, and/or having a melting point greater than the melting point of the gas-permeable film. In this way, gas inside the battery cell passing through the gas-permeable film can be smoothly discharged through the backing material to ensure safety performance of the battery cell. In addition, when the temperature of the battery cell reaches the melting point of the gas-permeable film, the gas-permeable film deforms and flows. Since the melting point of the backing material is greater than the melting point of the gas-permeable film, the backing material can support and fix the material of gas-permeable film to reduce the flow and deformation of the gas-permeable film.

In some embodiments, a recess is provided on the inside of the cover plate and/or housing, the recess is provided around the at least one through hole, and the gas-permeable film is at least partially accommodated in the recess. In this way, the internal space of the battery cell occupied by the gas-permeable film can be reduced, the overall thickness of the cover plate or housing can be reduced, and it is also ensured that gas inside the battery cell can be discharged from the battery cell through the gas-permeable film that is at least partially accommodated in the recess.

In some embodiments, a minimum distance from the edge of the gas-permeable film to the edge, inside the cover plate and/or housing, of the at least one through hole along the plane of the cover plate or housing is greater than or equal to 1.5 mm. In this way, it can be ensured that when the gas pressure inside the battery cell increases, the gas-permeable film and the cover plate or housing can still remain connected, and the degree of deformation of the gas-permeable film is within an acceptable range.

In some embodiments, when a plurality of through holes are provided, the plurality of through holes are adjacently arranged in the plane of the cover plate or housing. In this way, the requirements for the displacement of the battery cell can be met, a stronger support effect on the gas-permeable film can be generated by means of spacer portions between the plurality of through holes, and the area of the gas-permeable film can also be minimized on the premise of covering the plurality of through holes.

In some embodiments, the gas-permeable film is connected to the inside of the cap assembly and/or housing by thermal compounding or bonding. In this way, a connection manner between the gas-permeable film and the cover plate or housing is simplified, and an additional connecting structure is omitted, thus simplifying the manufacturing process and reducing the manufacturing cost.

In a second aspect, the present application provides a battery, comprising a battery cell in the foregoing embodiments.

In a third aspect, the present application provides a power consuming device, comprising a battery in the foregoing embodiments, the battery being used to provide electrical energy.

In a fourth aspect, the present application provides a method for manufacturing a battery cell, comprising: providing a cover plate, a housing, and a gas-permeable film, wherein the housing has an opening; covering the opening of the housing with the cover plate; providing at least one through hole in the cover plate and/or housing, the battery cell being in communication with the outside via the through hole; and connecting the gas-permeable film to the inside of the cover plate and/or housing with the at least one through hole covered. In this way, gas inside the battery cell can be discharged from the battery cell through the gas-permeable film, thereby reducing the risk of swelling or explosion of the battery cell; and the gas-permeable film can also prevent leakage of an electrolyte solution inside the battery cell and prevent external liquid from entering the battery cell. Moreover, since the gas-permeable film is connected to the inside of the cover plate or housing, an outward pressure is generated on the gas-permeable film when the gas pressure inside the battery cell increases, so that the edge of the gas-permeable film is more closely connected to the cover plate or housing, and the gas-permeable film is less prone to being separated from the cover plate or housing.

The at least one through hole is configured to comprise an accommodating section and an extending section in a direction perpendicular to the plane of the cover plate or housing, the accommodating section having an average bore-diameter greater than the bore-diameter of the extending section, and the accommodating section being closer to the inside of the battery cell than the extending section; and a backing material is provided, the backing material being at least partially accommodated in the accommodating section. In this way, when the gas-permeable film tends to deform outward under the action of the gas pressure inside the battery cell, an internal wall of the through hole provides an additional support force to the backing material, which further increases the support force for the gas-permeable film, so that the gas-permeable film is less prone to deformation.

The backing material is made of a hydrophobic and gas-permeable material having a gas permeation volume greater than the gas permeation volume of the gas-permeable film, and/or having a melting point greater than the melting point of the gas-permeable film. In this way, gas inside the battery cell passing through the gas-permeable film can be smoothly discharged through the backing material to ensure safety performance of the battery cell. In addition, when the temperature of the battery cell reaches the melting point of the gas-permeable film, the gas-permeable film deforms and flows. Since the melting point of the backing material is greater than the melting point of the gas-permeable film, the backing material can support and fix the material of gas-permeable film to reduce the flow and deformation of the gas-permeable film.

In some embodiments, a recess is provided on the inside of the cover plate and/or housing, the recess is provided around the at least one through hole, and the gas-permeable film is at least partially accommodated in the recess. In this way, the internal space of the battery cell occupied by the gas-permeable film can be reduced, the overall thickness of the cover plate or housing can be reduced, and it is also ensured that gas inside the battery cell can be discharged from the battery cell through the gas-permeable film that is at least partially accommodated in the recess.

In some embodiments, a minimum distance from the edge of the gas-permeable film to the edge, inside the cover plate and/or housing, of the through hole along the plane of the cover plate or housing is set to be greater than or equal to 1.5 mm. In this way, it can be ensured that when the gas pressure inside the battery cell increases, the gas-permeable film and the cover plate or housing can still remain connected, and the degree of deformation of the gas-permeable film is within an acceptable range.

In some embodiments, when a plurality of through holes are provided, the plurality of through holes are adjacently arranged in the plane of the cover plate and/or housing. In this way, the requirements for the displacement of the battery cell can be met, a stronger support effect on the gas-permeable film can be generated by means of spacer portions between the plurality of through holes, and the area of the gas-permeable film can also be minimized on the premise of covering the plurality of through holes.

In some embodiments, the gas-permeable film is connected to the inside of the cover plate and/or housing by thermal compounding or bonding.

### Brief Description of the Drawings

Various other advantages and benefits will become apparent to those of ordinary skill in the art upon reading the following detailed description of preferred embodiments. Like components are denoted by like reference numerals throughout the drawings. In the drawings:
Fig. 1A is a schematic structural diagram of a battery cell in the prior art;
Fig. 1B is a structural exploded view of a cap assembly of the battery cell in the prior art;
Fig. 1C is a front view of the cap assembly of the battery cell in the prior art;
Fig. 1D is a cross-sectional view through line A-A in Fig. 1C;
Fig. 1E is an enlarged view of part B in Fig. 1D;
Fig. 2 is a schematic structural diagram of a vehicle according to an embodiment of the present application;
Fig. 3 is an exploded schematic structural diagram of a battery according to an embodiment of the present application;
Fig. 4 is an exploded schematic structural diagram of a battery cell according to an embodiment of the present application;
Fig. 5 is a front view of a cover plate according to a comparative embodiment that aids the understanding of the present application;
Fig. 6 is a cross-sectional view through line B-B in Fig. 5;
Fig. 7 is an enlarged view of part C in Fig. 6;
Fig. 8 is a schematic diagram of one through hole with a variable bore-diameter in further comparative embodiments;
Fig. 9 is a schematic diagram of one through hole with a variable bore-diameter in some embodiments of the present invention;
Fig. 10 is a schematic diagram of one through hole with a variable bore-diameter in some embodiments of the present invention;
Fig. 11 is a schematic diagram of a plurality of through holes in some embodiments;
Fig. 12 is a schematic diagram of a plurality of through holes in some embodiments;
Fig. 13 is a schematic diagram of one through hole with a variable bore-diameter in some embodiments;
Fig. 14A is schematic diagram of an arrangement of a plurality of through holes in some embodiments of the present invention;
Fig. 14B is schematic diagram of an arrangement of a plurality of through holes in some embodiments of the present invention;
Fig. 14C is a schematic diagram of an arrangement of a plurality of through holes in some embodiments of the present invention; and
Fig. 15 is a schematic flowchart of a method for manufacturing a battery cell in some embodiments of the present application.

Reference numerals in the embodiments:

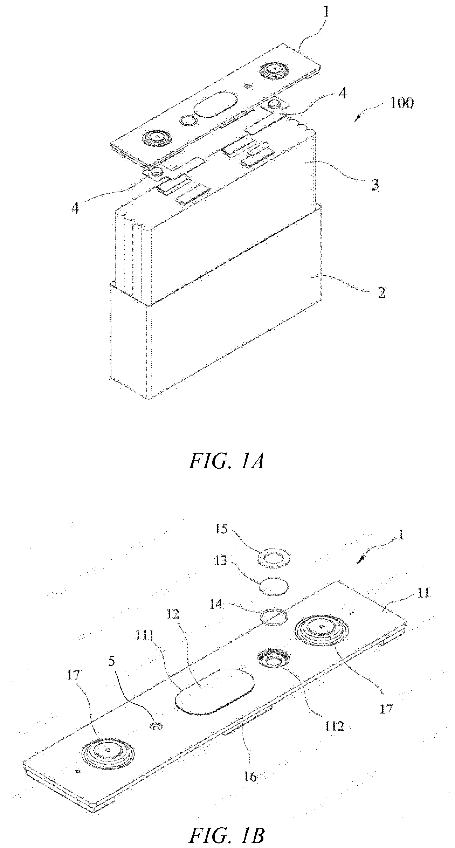

In Figs. 1A to 1E, battery cell 100, cap assembly 1, housing 2, electric motor assembly 3, adapter plate 4, filling port 5, cover plate 11, explosion-proof hole 111, vent hole 112, rupture disc 12, gas-permeable film 13, sealing component 14, annular metal press plate 15, through hole 151, insulating plate 16, and electrode terminal 17.

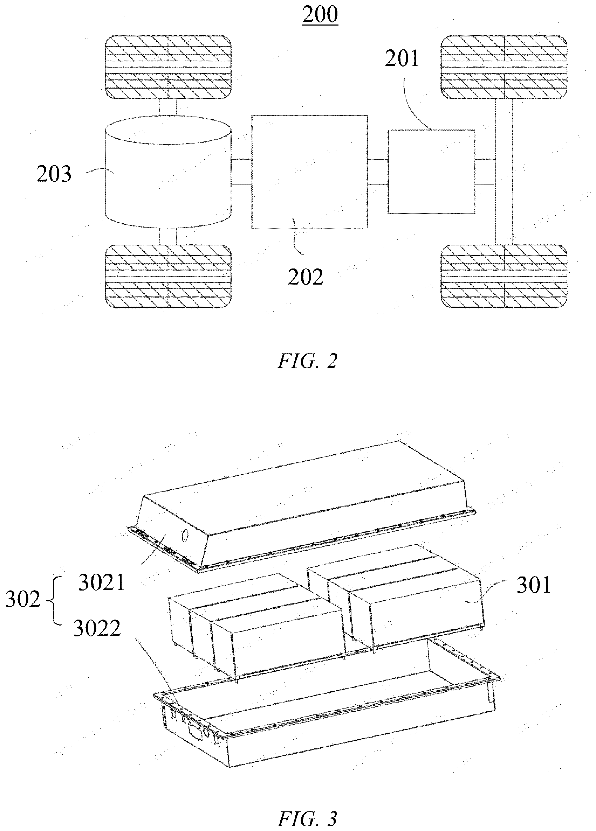

In Figs. 2 to 15, vehicle 200, battery 201, controller 202, motor 203, battery module 301, case 302, first portion 3021 of case 302, second portion 3022 of case 302, battery cell 40, cover plate 41, through hole 411, extending section 4111, accommodating section 4112, spacer portion 412, explosion-proof hole 412, filling port 413, housing 42, electrode assembly 43, gas-permeable film 44, backing material 45, and recess 46.

### Detailed Description of Embodiments

Embodiments of the technical solutions of the present application will be described in more detail below with reference to the drawings.

At present, from the perspective of the development of the market situation, batteries are used more and more widely. The batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of batteries, the market demand for the batteries is also expanding.

Due to small capacity or power of a single battery cell, a plurality of battery cells are often required to arrange to form a battery for use. As the cycle time of a battery increases, a chemical system inside the battery cell will generate gas, causing the gas pressure inside the battery cell to keep rising. Therefore, an exhaust structure is required to be provided on the battery cell to discharge gas in a housing. Once thermal runaway of the battery cell occurs, the gas pressure inside the battery cell rises sharply. When a predetermined temperature and pressure are reached, a pressure relief mechanism is activated to release the gas pressure inside the battery cell which may also take away part of heat, thereby slowing down a rate at which the thermal runaway occurs.

Figs. 1A to 1E show schematic structural diagrams of a battery cell and a cap assembly thereof. Referring to Figs. 1A and 1B, the battery cell comprises a housing 2, an electrode assembly 3, and a cap assembly 1. The cap assembly 1 comprises a cover plate 11 and electrode terminals 17. The cover plate 11 is fixed to an opening of the housing 2 so as to close the electrode assembly 3 and an electrolyte solution in an accommodating cavity of the housing 2. The electrode terminals 17 are provided on the cover plate 11 and comprise a negative electrode terminal and a positive electrode terminal. The two electrode terminals 17 are electrically connected to corresponding tabs by means of adapter plates 4. The cover plate 11 is provided with a filling port 5. The electrolyte solution is injected into the accommodating cavity of the housing 2 through the filling port 5. The cover plate 11 is provided with an explosion-proof hole 111, and a rupture disc 12 covers the explosion-proof hole 111. The cap assembly 1 further comprises an insulating plate 16 to insulate the cover plate 11 from the electrode assembly 3.

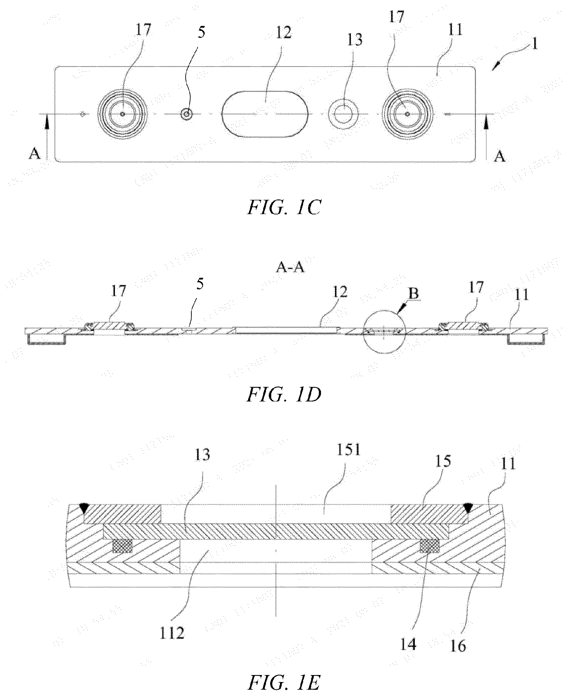

Fig. 1B is a structural exploded view of a cap assembly of the battery cell, Fig. 1C is a front view of the cap assembly, Fig. 1D is a cross-sectional view through line A-A in Fig. 1C, and Fig. 1E is an enlarged view of part B in Fig. 1D.

As shown in Figs. 1A to 1E, the cap assembly 1 comprises a cover plate 11, a gas-permeable film 13, a sealing component 14, and an annular metal press plate 15. The cover plate 11 has a vent hole 112, the vent hole 112 passes through the cover plate 11, and the vent hole 112 is blocked with the gas-permeable film 13. The gas-permeable film 13 has water blocking and gas permeation capabilities, so that gas in the battery cell can be diffused to the outside, thereby relieving the problem of the pressure inside the battery cell, and that external liquid can be prevented from entering the interior of the battery cell, thereby ensuring the sealing of the battery cell. The sealing component 14 is provided between the gas-permeable film 13 and the cover plate 11 and around the vent hole 112 for sealing a gap between the gas-permeable film 13 and the cover plate 11. The annular metal press plate 15 has a through hole 151 passing through the annular metal press plate in its thickness direction, and the annular metal press plate is pressed to the gas-permeable film 13, and is fixed to the cover plate 11 by welding, so that the gas-permeable film 13 is fixed to the cover plate 11.

With the above structure, gas inside the battery cell can be discharged from the vent hole 112 through the gas-permeable film 13, thereby achieving an effect of relieving the pressure inside the battery cell.

The inventor has noticed that in the above technical solution of the prior art, the gas-permeable film 13 is connected to the cover plate 11 by means of the annular metal press plate 15 and the sealing component 14, resulting in a poor air tightness between the gas-permeable film 13 and the annular metal press plate 15 and the cover plate 11. As time goes, the sealing component 14 ages, and the gas-permeable film 13 is deformed in the case of increasing internal pressure, which both lead to an increase in the gap between the cover plate 11 and the gas-permeable film 13. In addition, since the gas-permeable film 13 has no support, it is more likely to be deformed during use, which also leads to an increase in the gap between the cover plate 11 and the gas-permeable film 13. Moreover, since the annular metal press plate 15 is fixed to the cover plate 11 by welding, there is a risk of falling off of particles or metal scraps.

In order to solve the above defects in the prior art, the inventor has designed a battery cell after intensive research, in which one or more through holes that connect the inside and the outside of the battery cell are provided in a cover plate as vent holes, and a gas-permeable film is connected to the inside of the cover plate by thermal compounding or bonding and covers the through hole. With this arrangement of the gas-permeable film, a connecting structure for the gas-permeable film and the cover plate is simplified, and the risk such as welding slag splashing caused by welding is avoided. When a plurality of vent holes are provided, the plurality of vent hole may be adjacently arranged, which improves a support capability for the gas-permeable film while ensuring a gas permeation volume, and also minimizes the area of the gas-permeable film. In addition, a backing material may also be accommodated in the vent hole, the backing material has a gas permeability stronger than the gas permeability of the gas-permeable film, and a melting point higher than the melting point of the gas-permeable film, so that the support capability for the gas-permeable film is further improved while ensuring the gas permeation volume. The inventor has further found that by a simplified manner for combining the gas-permeable film with the cover plate by thermal compounding or bonding, there is no need to provide a separate connecting structure on the cover plate to fix the gas-permeable film. Therefore, in addition to being provided in the cover plate, the vent hole may be provided at any position on a housing of the battery cell. In this case, the arrangement of the vent hole and the backing material and the connection manner between the gas-permeable film and the housing can be the same as the above manners for providing the vent hole in the cover plate and connecting the gas-permeable film and the cover plate.

The battery cell disclosed in the embodiments of the present application may be used in, but not limited to, a power consuming device such as a vehicle, a ship, or an aircraft. A power system having the power consuming device composed of the battery cell, the battery, etc. that are disclosed in the present application may be used, which is conductive to discharging gas inside the battery cell to prevent gas from accumulating inside the housing, thereby improving performance of an electrode assembly, prolonging service life of the battery cell, and ensuring safety performance of the battery cell.

The embodiments of the present application provide a power consuming device using a battery as a power source. The power consuming device may be, but is not limited to, a mobile phone, a tablet, a laptop, an electric toy, an electric tool, a battery cart, an electric vehicle, a ship, a spacecraft, etc. The electric toy may include a stationary or mobile electric toy, for example, a game console, an electric vehicle toy, an electric ship toy an electric airplane toy, etc. The spacecraft may include an airplane, a rocket, a space shuttle, a spaceship, etc.

For ease of description of the following embodiments, an embodiment of the present application in which the power consuming device is a vehicle 200 is taken as an example for description.

Referring to Fig. 2, Fig. 2 is a schematic structural diagram of a vehicle 200 according to an embodiment of the present application. The vehicle 200 may be a fuel vehicle, a gas vehicle, or a new energy vehicle. The new energy vehicle may be a battery electric vehicle, a hybrid electric vehicle, an extended-range vehicle, etc. A battery 201 is provided inside the vehicle 200, and the battery 201 may be provided at the bottom, the front or the back of the vehicle 200. The battery 201 may be used for power supply for the vehicle 200. For example, the battery 201 may serve as a power source for operating the vehicle 200. The vehicle 200 may further comprise a controller 202 and a motor 203, and the controller 202 is used to control the battery 201 to supply power to the motor 203, for example, to satisfy the working power requirements during the starting, navigation and traveling of the vehicle 200.

In some embodiments of the present application, the battery 201 can not only serve as a power source for operating the vehicle 200, but also serve as a power source for driving the vehicle 200, instead of or partially instead of fuel or natural gas, to provide driving power for the vehicle 200.

Referring to Fig. 3, Fig. 3 is an exploded schematic structural diagram of a battery 201 according to an embodiment of the present application. The battery 201 comprises a case 302 and a plurality of battery modules 301. The plurality of battery modules 301 are accommodated in the case 302. The case 302 is used to provide an accommodating space for the plurality of battery modules 301, and the case 302 may be of various structures. In some embodiments, the case 302 may comprise a first portion 3021 and a second portion 3022. The first portion 3021 and the second portion 3022 are fitted to each other in a covered manner, and the first portion 3021 and the second portion 3022 together define an accommodating space for accommodating the plurality of battery modules 301. The second portion 3022 may be of a hollow structure with one end open, the first portion 3021 may be of a plate-like structure, and the first portion 3021 is fitted to an open side of the second portion 3022 in a covered manner such that the first portion 3021 and the second portion 3022 together define the accommodating space; and the first portion 3021 and the second portion 3022 may also be of a hollow structure with one side open, and an open side of the first portion 3021 is fitted to the open side of the second portion 3022 in a covered manner. Of course, the case 302 formed by the first portion 3021 and the second portion 3022 may be in various shapes such as a cylinder and a cuboid.

The battery module 301 may comprise one or more battery cells 40 in order to meet different power demands. The plurality of battery cells 40 may be in series connection or parallel connection or series-parallel connection to form one battery module 301, and the plurality of battery modules 301 may then be in series connection or parallel connection or series-parallel connection to form a battery. The series-parallel connection refers to a combination of series connection and parallel connection. Exemplarily, the battery 20 may comprise a plurality of battery cells 40, wherein the plurality of battery cells 40 may be in series connection or parallel connection or series-parallel connection. The plurality of battery cells 40 may be directly provided in the case. That is, the plurality of battery cells 40 may directly constitute a battery 201, or may constitute a battery module 301 and the battery modules 301 then constitute a battery 201. Each battery cell 40 may be a secondary battery or a primary battery, and may also be a lithium-ion battery, a sodium-ion battery, or a magnesium-ion battery, but is not limited thereto. The battery cell 40 may be cylindrical, flat, rectangular, or in another shape.

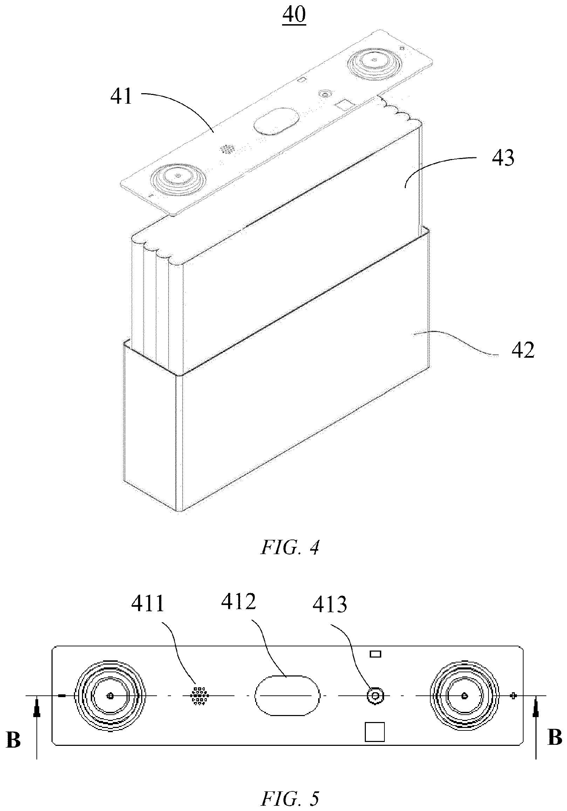

Referring to Fig. 4, Fig. 4 is an exploded schematic structural diagram of a battery cell 40 according to an embodiment of the present application. The battery cell 40 is the smallest unit of a battery. As shown in Fig. 4, the battery cell 40 comprises a cover plate 41, a housing 42, an electrode assembly 43, and other functional components.

The cover plate 41 refers to a component that covers an opening of the housing 42 to isolate an internal environment of the battery cell 40 from an external environment. Without limitation, the cover plate 41 may have a shape adapted to that of the housing 42 to fit with the housing 42. Optionally, the cover plate 41 may be made of a material with certain hardness and strength, and thus the cover plate 41 is less prone to deformation when being squeezed or collided, so that the battery cell 40 can have a higher structural strength, and safety performance can also be improved. The cover plate 41 is provided with a through hole 411 that is used to discharge gas inside the battery cell 40; an explosion-proof hole 412 that is used to quickly release gas inside the battery cell when thermal runaway occurs in the battery cell 40 and an internal gas pressure rises rapidly; and a filling port 413 through which an electrolyte solution is injected into the accommodating cavity of the housing 42. Functional components, such as electrode terminals, may be provided on the cover plate 41. The electrode terminals may be used for electrical connection to the electrode assembly 43 for outputting or inputting electrical energy of the battery cell 40. The cover plate 41 may also be made of various materials, such as copper, iron, aluminum, stainless steel, an aluminum alloy, and plastic, or other materials with certain hardness and strength, which is not particularly limited in the embodiments of the present application. In some embodiments, an insulating member (not shown) may be further provided on an inner side of the cover plate 41. The insulating member may be used to isolate electrical connection components within the housing 42 from the cover plate 41 so as to reduce the risk of short circuit. Exemplarily, the insulating member may be made of plastic, rubber, etc.

The housing 42 is an assembly that is used to fit with the cover plate 41 to form an internal environment of the battery cell 40, where the formed internal environment may be used for accommodating the electrode assembly 43, an electrolyte solution and other components. The housing 42 and the cover plate 41 may be separate components, and the housing 42 may be provided with an opening, at which the cover plate 41 covers the opening to form the internal environment of the battery cell 40. Without limitation, the cover plate 41 and the housing 42 may also be integrated. Specifically, the cover plate 41 and the housing 42 can firstly form a common connection surface before other components are placed into the housing, and then the cover plate 41 covers the housing 42 when the interior of the housing 42 needs to be packaged. The housing 42 may be in various shapes and various sizes, for example, in the shape of a cuboid, a cylinder, a hexagonal prism, etc. Specifically, the shape of the housing 42 may be determined depending on the specific shape and size of the electrode assembly 43. The housing 42 may be made of various materials, such as copper, iron, aluminum, stainless steel, an aluminum alloy, and plastic, or other materials with certain hardness and strength, which is not particularly limited in the embodiments of the present application.

The electrode assembly 43 is a component, where an electrochemical reaction occurs, in the battery cell 40. One or more electrode assemblies 43 may be contained in the housing 42. The electrode assembly 43 is mainly formed by winding or lamination of a positive plate and a negative plate, and a separator is usually provided between the positive plate and the negative plate. The portions of the positive plate and the negative plate that have an active material constitute a main body portion of the electrode assembly, and the portions of the positive plate and the negative plate that have no active material each constitute a tab. A positive electrode tab and a negative electrode tab can be both located at one end of the main body portion or respectively at two ends of the main body portion. During the charging and discharging of the battery, a positive active material and a negative active material react with the electrolyte solution, and the tabs are connected to the electrode terminals to form a current loop.

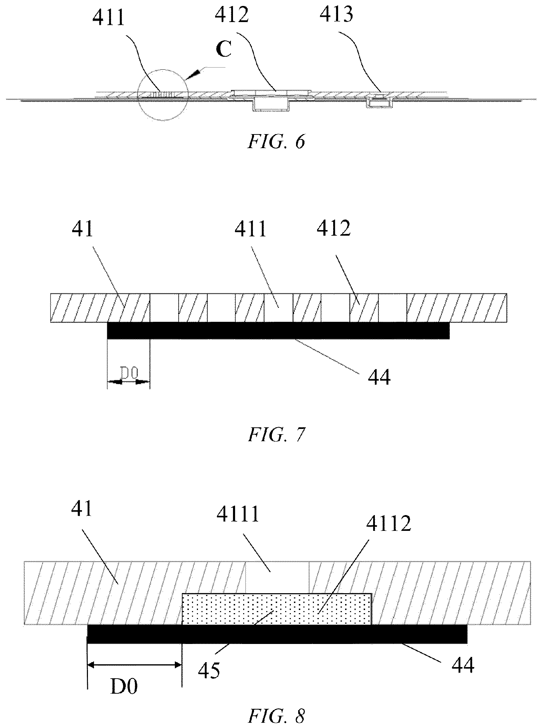

According to comparative embodiments to aid understanding of the present application, referring to Figs. 4 to 7, Fig. 4 is an exploded schematic structural diagram of a battery cell 40 according to a comparative embodiment, Fig. 5 is a front view of the cover plate, and Fig. 6 is a cross-sectional view through line B-B in Fig. 5 (the whole cover plate is not shown), and Fig. 7 is an enlarged view of part C in Fig. 6.

The present application provides a battery cell 40. The battery cell 40 comprises a cover plate 41, a housing 42, and a gas-permeable film 44. The housing 42 has an opening, and the cover plate 41 covers the opening of the housing 42. The cover plate 41 and/or housing 42 have/has at least one through hole 411, and the battery cell is in communication with the outside via the through hole 411. The gas-permeable film 44 is connected to the inside of the cover plate 41 and/or housing 42 and covers the at least one through hole 411.

In Figs. 4 to 7, at least one through hole 411 is schematically provided in the cover plate 41. However, the at least one through hole 411 may also be provided at any position on each side plate or bottom plate of the housing 42, and the arrangement and position relationship between the through hole 411 and the housing 42 are the same as the arrangement and position relationship between the through hole 411 and the cover plate 41 shown in Fig. 7.

In addition, schematically, through holes 411 in Figs. 4 to 7 are represented as a plurality of through holes 411 with fixed bore-diameters.

As shown, the housing 42 is filled with the electrolyte solution, and at least one electrode assembly 43 is arranged in the housing 42. Those skilled in the art can understand that the battery cell further comprises other components not shown in the drawings.

The through hole 411 passes through the cover plate 41 or housing 42. One or more through holes 411 are provided , as long as the minimum area of the through holes 411 in the plane of the cover plate 41 or the plane of the housing 42 can meet the requirements for the displacement of the battery cell. The bore-diameter of the through hole 411 may be fixed or variable. When the bore-diameter of the through hole 411 is a fixed bore-diameter, and when one through hole 411 is provided, the minimum area of the through hole 411 in the plane of the cover plate 41 or housing 42 is the opening area of the through hole 411 in the plane of the cover plate 41 or housing 42. When the bore-diameter of the through holes 411 is a fixed bore-diameter, and when a plurality of through holes 411 are provided, the minimum area of the through holes 411 in the plane of the cover plate 41 or housing 42 is the sum of the opening areas of the through holes 411 in the plane of the cover plate 41 or housing 42. When the bore-diameter of the through hole 411 is a variable bore-diameter, and when one through hole 411 is provided, the minimum area of the through hole 411 in the plane of the cover plate 41 or housing 42 is the smaller of the opening areas of the through hole 411 in the planes of an inner surface and an outer surface of the cover plate 41 or housing 42. When the bore-diameter of the through hole 411 is a variable bore-diameter, and when a plurality of through holes 411 are provided, the minimum area of the through holes 411 in the plane of the cover plate 41 or housing 42 is the smaller of the sums of the opening areas of the plurality of through holes 411 in the planes of an inner surface and an outer surface of the cover plate 41 or housing 42.

In this example, the plane of the cover plate 41 refers to the plane where the cover plate 41 is located, the plane of the housing 42 refers to four side surfaces or a bottom surface of the housing where the through hole 411 is provided, the plane of the inner surface of the cover plate 41 or housing 42 refers to a surface, inside the battery cell 40, of the cover plate 41 or housing 42, and the plane of the outer surface of the plane of the cover plate 41 or housing 42 refers to a surface, outside the battery cell 40, of the cover plate 41 or housing 42. Optionally, the gas-permeable film 44 is made of a polymer material with gas permeation properties (e.g., a combination of one or two or more of PP, PE, and PU), and can block liquid. The gas-permeable film 44 is connected to the inside of the cover plate 41 and/or housing 42 and covers the at least one through hole 411.

With the above arrangement, gas inside the battery cell 40 can be discharged from the battery cell 40 through the gas-permeable film 44, thereby reducing the risk of swelling or explosion of the battery cell 40; and the gas-permeable film can also prevent leakage of the electrolyte solution inside the battery cell 40 and prevent external liquid from entering the battery cell 40. Moreover, since the gas-permeable film 44 is connected to the inside of the cover plate 41 or housing 42, an outward pressure is generated on the gas-permeable film 44 when the gas pressure inside the battery cell 40 increases, so that the edge of the gas-permeable film 44 is more closely connected to the cover plate 41 or housing 42, and the gas-permeable film 44 is less prone to being separated from the cover plate 41 or housing 42. Moreover, as the number of through holes 411 increases, the support capability of spacer portions 412 between the plurality of through holes 411 in the cover plate 41 or housing 42 for the gas-permeable film 44 is also accordingly increased, so that the gas-permeable film 44 is less prone to deformation.

Figs. 8 to 10 show examples of one through hole 411 with a variable bore-diameter in some comparative embodiments and embodiments of the present invention. In Figs. 8 to 10, the through hole 411 comprises an accommodating section 4112 and an extending section 4111 in a direction perpendicular to the plane of the cover plate 41 or housing 42. The accommodating section 4112 is closer to the inside of the battery cell 40 than the extending section 4111. The accommodating section 4112 has an average bore-diameter greater than the average bore-diameter of the extending section 4111. The battery cell 40 further comprises a backing material 45, the backing material 45 being at least partially accommodated in the accommodating section 4112.

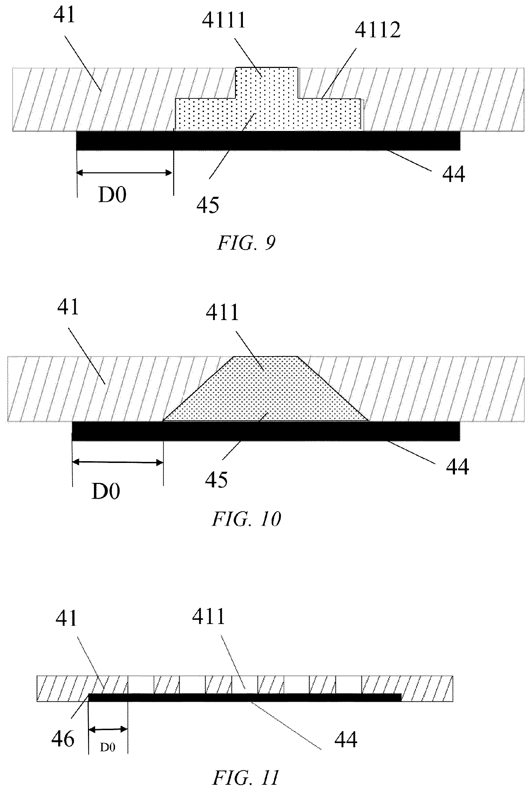

The space from the accommodating section 4112 to the extending section 4111 may be reduced step by step (e.g., as shown in Figs. 8 and 9 ), or gradually reduced (e.g., as shown in Fig. 10). Figs. 8 and 9 only exemplarily show one step. A configuration in which more steps are provided is also possible. The accommodating section 4112 and the extending section 4111 only exemplarily define a variable bore-diameter. There may be an obvious dividing point (e.g., as shown in Figs. 8 and 9) or no obvious dividing point (e.g., as shown in Fig. 10) between the accommodating section 4112 and the extending section 4111. When there is no obvious dividing point, a specific position in the through hole may be appropriately selected as a dividing point between the accommodating section 4112 and the extending section 4111.

When the through hole is as shown in Figs. 8 and 9, the bore-diameters of the accommodating section 4112 and the extending section 4111 are fixed, and the average bore-diameter is equal to the respective bore-diameter of the accommodating section 4112 and the extending section 4111. When the through hole is as shown in Fig. 10, a section from the dividing point to the opening of the through hole 411 outside the battery cell 40 is the extending section 4111, and the average bore-diameter of the extending section is an average value of the bore-diameters at various positions on this section; and a section from the dividing point to the opening of the through hole 411 inside the battery cell 40 is the accommodating section 4112, and the average bore-diameter of the section is an average value of the bore-diameters at various positions on this section. Therefore, a portion of the through hole 411 that is closer to the inside of the battery cell 40, that is, the accommodating section 4112 has an average bore-diameter greater than the average bore-diameter of a portion that is closer to the outside of the battery cell 40, that is, the extending section 4111. It can be understood that when a plurality of through holes 411 are provided, the through holes 411 may have a fixed bore-diameter, or a variable bore-diameter, or may be a combination of through holes 411 having a fixed bore-diameter and various variable bore-diameters.

According to the invention, the backing material 45 is also contained in the through hole 411. In the drawings of the present application, the backing material 45 is indicated by a dot matrix background. As shown in the comparative embodiment of Fig 8, only the accommodating section 4112 is filled with the backing material 45. As shown in Fig. 9, the accommodating section 4112 and the extending section 4111 are filled with the backing material 45. As shown in Fig. 10, the through hole 411 with a gradually-varied bore-diameter is filled with the backing material 45. It can be understood that when a plurality of through holes 411 are provided, part of the space of some of the through holes, or the entire space of all the through holes may be filled with the backing material 45.

The through holes 411 may have a fixed bore-diameter, or a variable bore-diameter, or may be a combination of through holes 411 having a fixed bore-diameter and various variable bore-diameters.

With the above arrangement of the through holes 411, when the gas-permeable film 44 tends to deform outward under the action of the gas pressure inside the battery cell 40, an internal wall of the through hole 411 in an exemplary shape given in Figs. 8 to 10 provides an additional support force to the backing material 45, which further increases the support force for the gas-permeable film 44, so that the gas-permeable film 44 is less prone to deformation. According to some embodiments of the present application, optionally, the backing material 45 is made of a hydrophobic and gas-permeable material having a gas permeation volume greater than the gas permeation volume of the gas-permeable film 44, and/or having a melting point greater than the melting point of the gas-permeable film 44.

The backing material 45 is made of a hydrophobic and gas-permeable material, so that in addition to satisfying support requirements for the gas-permeable film 44, it can be ensured that gas passing through the gas-permeable film 44 can smoothly pass through the backing material 45, thereby ensuring a gas permeation effect of the gas-permeable film 44; external liquid, etc., can be blocked, thereby preventing the external liquid from entering the interior of the battery cell 40 to affect the battery cell 40; and leakage of the electrolyte solution inside the battery cell 40 can be prevented.

In some optional embodiments, the melting point of the backing material 45 is greater than the melting point of the gas-permeable film 44. Optionally, a difference value between the melting point of the backing material 45 and the melting point of the gas-permeable film 44 is greater than or equal to 10°C.

The gas-permeable film 44 is made of a material for achieving a gas permeation effect of the battery cell, and gas passing through the gas-permeable film 44 needs to be smoothly discharged to the outside of the battery cell 40 through the backing material 45. Therefore, It is necessary that the backing material 45 has a gas permeation volume greater than the gas permeation volume of the gas-permeable film 44, so that gas inside the battery cell 40 passing through the gas-permeable film 44 can be smoothly discharged through the backing material 45 to ensure safety performance of the battery cell 40.

Since the melting point of the backing material 45 is greater than the melting point of the gas-permeable film 44, the gas-permeable film 44 deforms and flows when the temperature of the battery cell 40 reaches the melting point of the gas-permeable film 44. Since the melting point of the backing material 45 is greater than the melting point of the gas-permeable film 44, in this case, the backing material 45 does not reach its melting point, and thus can support and fix the material of the gas-permeable film 44 to reduce the flow and deformation of the gas-permeable film 44.

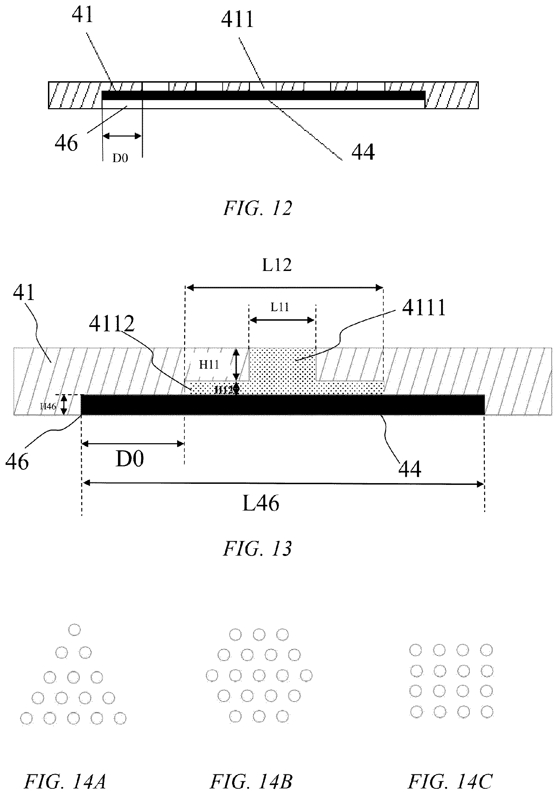

According to some embodiments, referring to Figs. 11 to 13, a plurality of through holes 411 being provided is taken as an example in Figs. 11 and 12, and one through hole 411 being provided is taken as an example in Fig. 13, which show schematic diagrams of a recess 46 being provided on the inside of the cover plate 41 or housing 42. Optionally, the recess 46 is provided on the inside of the cover plate 41 and/or housing 42, the recess 46 is provided around the at least one through hole 411, and the gas-permeable film 44 is at least partially accommodated in the recess.

The recess 46 is provided on the inside of the cover plate 41 or housing 42 and around the at least one through hole 411 for at least partially accommodating the gas-permeable film 44 therein, so that the gas-permeable film 44 can cover the at least one through hole 411 while being partially accommodated in the recess 46.

By providing the recess 46, the internal space of the battery cell 40 occupied by the gas-permeable film 44 can be reduced, the overall thickness of the cover plate 41 or housing 42 can be reduced, and it is also ensured that gas inside the battery cell 40 can be discharged to the outside of the battery cell 40 through the gas-permeable film that is at least partially accommodated in the recess 46.

Referring to Figs. 7 to 13, according to some embodiments, optionally, a minimum distance D0 from the edge of the gas-permeable film 44 to the edge, inside the cover plate 41 and/or housing 42, of the at least one through hole 411 along the plane of the cover plate 41 or housing 42 is greater than or equal to 1.5 mm.

When a plurality of through holes 411 are provided, the minimum distance D0 is a minimum distance from the edge, inside the cover plate 41 or housing 42, of the through hole 411 that is closest to the edge of the gas-permeable film 44 from the plurality of through holes 411 to the edge of the gas-permeable film 44 along the plane of the cover plate 41 or housing 42, as shown in Figs. 7, 11 and 12. When one through hole 411 is provided, the D0 is a minimum distance from the edge, inside the cover plate 41 or housing 42, of the through hole 411 to the edge of the gas-permeable film 44 along the plane of the cover plate 41 or housing 42, as shown in Figs. 8 to 10 and 13.

By simulating internal pressure conditions of different battery cells 40, tests are carried out for different minimum distances D0. When the minimum distance D0 is greater than or equal to 1.5 mm, the gas-permeable film 44 and the cover plate 41 or housing 42 can still remain connected, and the degree of deformation of the gas-permeable film 44 is within an acceptable range.

According to some embodiments of the present application, optionally, when a plurality of through holes 411 are provided, the plurality of through holes 411 are adjacently arranged in the plane of the cover plate 41 or housing 42.

Figs. 14A to 14C schematically show adjacent arrangements of a plurality of through holes 411. It can be understood that the arrangements of the plurality of through holes 411 and the number of through holes 411 are not limited to the three modes shown in Figs. 14A to 14C. The plurality of through holes 411 may also be adjacently arranged in other regular or irregular ways.

Since the plurality of through holes 411 are adjacently arranged, the requirements for the displacement of the battery cell 40 can be met, a stronger support effect on the gas-permeable film 44 can be generated by means of spacer portions 412 between the plurality of through holes 411, and the area of the gas-permeable film 44 can also be minimized on the premise of covering the plurality of through holes.

According to some embodiments of the present application, optionally, the gas-permeable film 44 is connected to the inside of the cover plate 41 and/or housing 42 by thermal compounding and/or bonding.

The gas-permeable film 44 is connected to the cover plate 41 or housing 42 by thermal compounding, so that at a bonding surface of the gas-permeable film 44 and the cover plate 41 or housing 42, functional groups of the gas-permeable film 44 are bonded to functional groups of the cover plate 41, the housing 42, or the backing material 45 by chemical bonds, so that a strong connection force is obtained. In some embodiments, the gas-permeable film 44 may also be connected to the cover plate 41 or housing 42 by bonding.

With the above connection manner of thermal compounding or bonding, the connection manner between the gas-permeable film 44 and the cover plate 41 or housing 42 is simplified, and an additional connecting structure is omitted. Therefore, the manufacturing process is simplified and the manufacturing cost is reduced.

According to some embodiments of the present application, optionally, the present application further provides a battery, comprising a battery cell 40 according to the foregoing embodiments.

The battery may comprise one or more battery modules, and the plurality of battery modules may be in series connection or parallel connection or series-parallel connection to constitute the battery. The battery module further comprises one or more battery cells 40. The plurality of battery cells may be in series connection or parallel connection or series-parallel connection to constitute the battery module. Alternatively, the battery may directly comprise one or more battery cells 40 as described above. The plurality of battery cells may be in series connection or parallel connection or series-parallel connection to constitute the battery.

The battery may comprise a housing for housing and sealing the battery modules or battery cells therein, or may not comprise a housing but enable the battery modules or battery cells to be exposed. Various shapes of the housing can be selected according to specific requirements, so as to adapt to the shape of the battery module or battery cell therein, or to adapt to the arrangement of a power consuming device using the battery.

Since the battery comprises the battery cell 40 in the foregoing embodiments, gas inside the battery cell 40 can be discharged from the battery cell 40 in a timely manner, thereby reducing the risk of swelling or explosion of the battery cell 40, and thus further reducing the safety risk of the battery.

According to some embodiments of the present application, optionally, the present application further provides a power consuming device, comprising a battery according to the foregoing embodiments, the battery being used to provide electrical energy for the power consuming device.

The power consuming device may be, but is not limited to, a mobile phone, a tablet, a laptop, an electric toy, an electric tool, a battery cart, an electric vehicle, a ship, a spacecraft, etc. The electric toy may include a stationary or mobile electric toy, for example, a game console, an electric vehicle toy, an electric ship toy an electric airplane toy, etc. The spacecraft may include an airplane, a rocket, a space shuttle, a spaceship, etc.

Since the power consuming device comprises the battery cell 40 in the foregoing embodiments, gas inside the battery cell 40 can be discharged from the battery cell 40 in a timely manner, thereby reducing the risk of swelling or explosion of the battery cell 40, and thus further reducing the safety risk of the power consuming device.

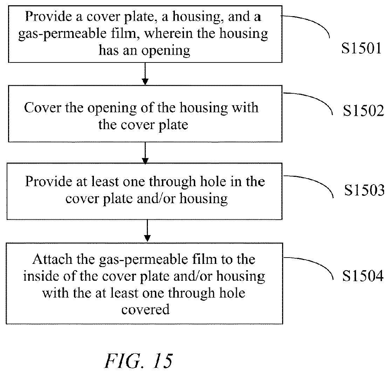

According to some embodiments of the present application, optionally, referring to Fig. 15, the present application further provides a method for manufacturing a battery cell, which specifically comprises the following steps:
S1501, providing a cover plate, a housing, and a gas-permeable film, wherein the housing has an opening;
S 1502, covering the opening of the housing with the cover plate;
S1503, providing at least one through hole in the cover plate and/or housing, the battery cell being in communication with the outside via the through hole, wherein the arrangement and specific shape of the through hole is the same as that defined in the foregoing embodiments; and
S1504, attaching the gas-permeable film to the inside of the cover plate and/or housing with the at least one through hole covered.

The type, material, shape, and arrangement of the cover plate, the housing, the gas-permeable film, and the through hole, and the connection relationships between the various parts are all the same as those defined in the foregoing embodiments.

By means of a battery cell manufactured by the above method, the risk of swelling or explosion of the battery cell 40 can be reduced, leakage of the electrolyte solution inside the battery cell 40 can be prevented, and external liquid can also be prevented from entering into the battery cell 40. Moreover, since the gas-permeable film 44 is connected to the inside of the cover plate 41 or housing 42, an outward pressure is generated on the gas-permeable film 44 when the gas pressure inside the battery cell 40 increases, so that the edge of the gas-permeable film 44 is more closely connected to the cover plate 41 or housing 42, and the gas-permeable film 44 is less prone to being separated from the cover plate 41 or housing 42. Moreover, as the number of through holes 411 increases, the support capability of spacer portions 412 between the plurality of through holes 411 in the cover plate 41 or housing 42 for the gas-permeable film 44 is also accordingly increased, so that the gas-permeable film 44 is less prone to deformation.

According to some embodiments of the present application, optionally, the at least one through hole 411 is configured to comprise an accommodating section 4112 and an extending section 4111 in a direction perpendicular to the plane of the cover plate 41 or housing 42, the accommodating section 4112 having an average bore-diameter greater than the bore-diameter of the extending section 4111, and the accommodating section 4112 being closer to the inside of the battery cell 40 than the extending section 411. A backing material 45 is provided, the backing material 45 being at least partially accommodated in the accommodating section 4112.

The shape, arrangement and position relationship of the through hole 411, the accommodating section 4112, the extending section 4111, and the backing material 45 are the same as those in the foregoing embodiments.

With the above arrangement of the through hole 411, when the gas-permeable film 44 tends to deform outward under the action of the gas pressure inside the battery cell 40, an internal wall of the through hole 411 in an exemplary shape given in Figs. 8 to 10 provides a stronger support force to the backing material 45, which further increases a support force for the gas-permeable film 44, so that the gas-permeable film 44 is less prone to deformation. According to some embodiments of the present application, optionally, the backing material 45 is made of a hydrophobic and gas-permeable material having a gas permeation volume greater than the gas permeation volume of the gas-permeable film 44, and/or having a melting point greater than the melting point of the gas-permeable film 44.

The backing material 45 is made of a hydrophobic and gas-permeable material, so that in addition to satisfying support requirements for the gas-permeable film 44, it can be ensured that gas passing through the gas-permeable film 44 can smoothly pass through the backing material 45, thereby ensuring a gas permeation effect of the gas-permeable film 44; external liquid, etc., can be blocked, thereby preventing the external liquid from entering the interior of the battery cell 40 to affect the battery cell 40; and leakage of the electrolyte solution inside the battery cell 40 can be prevented.

In some optional embodiments, the melting point of the backing material 45 is greater than the melting point of the gas-permeable film 44. Optionally, a difference value between the melting point of the backing material 45 and the melting point of the gas-permeable film 44 is greater than or equal to 10°C.

The gas-permeable film 44 is made of a material for achieving a gas permeation effect of the battery cell, and gas passing through the gas-permeable film 44 needs to be smoothly discharged to the outside of the battery cell 40 through the backing material 45. Therefore, It is necessary that the backing material 45 has a gas permeation volume greater than the gas permeation volume of the gas-permeable film 44, so that gas inside the battery cell 40 passing through the gas-permeable film 44 can be smoothly discharged through the backing material 45 to ensure safety performance of the battery cell 40.

Since the melting point of the backing material 45 is greater than the melting point of the gas-permeable film 44, the gas-permeable film 44 deforms and flows when the temperature of the battery cell 40 reaches the melting point of the gas-permeable film 44. Since the melting point of the backing material 45 is greater than the melting point of the gas-permeable film 44, in this case, the backing material 45 does not reach its melting point, and thus can support and fix the material of the gas-permeable film 44 to reduce the flow and deformation of the gas-permeable film 44.

According to some embodiments of the present application, referring to Figs. 11 to 13, a plurality of through holes 411 being provided is taken as an example in Figs. 11 and 12, and one through hole 411 being provided is taken as an example in Fig. 13, which show schematic diagrams of a recess 46 being provided on the inside of the cover plate 41 or housing 42. Optionally, the recess 46 is provided on the inside of the cover plate 41 and/or housing 42, the recess 46 is provided around the at least one through hole 411, and the gas-permeable film 44 is at least partially accommodated in the recess.

The recess 46 is provided on the inside of the cover plate 41 or housing 42 and around the at least one through hole 411 for at least partially accommodating the gas-permeable film 44 therein, so that the gas-permeable film 44 can cover the at least one through hole 411 while being partially accommodated in the recess 46.

By providing the recess 46, the internal space of the battery cell 40 occupied by the gas-permeable film 44 can be reduced, the overall thickness of the cover plate 41 or housing 42 can be reduced, and it is also ensured that gas inside the battery cell 40 can be discharged to the outside of the battery cell 40 through the gas-permeable film that is at least partially accommodated in the recess 46.

Referring to Figs. 7 to 13, according to some embodiments of the present application, optionally, a minimum distance D0 from the edge of the gas-permeable film 44 to the edge, inside the cover plate 41 and/or housing 42, of the at least one through hole 411 along the plane of the cover plate 41 or housing 42 is greater than or equal to 1.5 mm, and/or a peeling force between the gas-permeable film 44 and the cover plate 41 and/or housing 42 is greater than or equal to 1 N/mm.

When a plurality of through holes 411 are provided, the D0 is a minimum distance from the edge, inside the cover plate 41 or housing 42, of the through hole 411 that is closest to the edge of the gas-permeable film 44 from the plurality of through holes 411 to the edge of the gas-permeable film 44 along the plane of the cover plate 41 or housing 42, as shown in Figs. 7, 11 and 12. When one through hole 411 is provided, the D0 is a minimum distance from the edge, inside the cover plate 41 or housing 42, of the through hole 411 to the edge of the gas-permeable film 44 along the plane of the cover plate 41 or housing 42, as shown in Figs. 8 to 10 and 13.

By simulating internal pressure conditions of different battery cells 40, tests are carried out for different D0. When the minimum distance D0 is greater than or equal to 1.5 mm, the gas-permeable film 44 and the cover plate 41 or housing 42 can still remain connected, and the degree of deformation of the gas-permeable film 44 is within an acceptable range.

According to some embodiments of the present application, optionally, when a plurality of through holes 411 are provided, the plurality of through holes 411 are adjacently arranged in the plane of the cover plate 41 or housing 42.

Figs. 14A to 14C schematically show adjacent arrangements of a plurality of through holes 411. It can be understood that the arrangements of the plurality of through holes 411 and the number of through holes 411 are not limited to the three modes shown in Figs. 14A to 14C. The plurality of through holes 411 may also be adjacently arranged in other regular or irregular ways.

Since the plurality of through holes 411 are adjacently arranged, the requirements for the displacement of the battery cell 40 can be met, a stronger support effect on the gas-permeable film 44 can be generated by means of spacer portions 412 between the plurality of through holes 411, and the area of the gas-permeable film 44 can also be minimized on the premise of covering the plurality of through holes.

According to some embodiments of the present application, optionally, the gas-permeable film 44 is connected to the inside of the cover plate 41 and/or housing 42 by thermal compounding and/or bonding.

The gas-permeable film 44 is connected to the cover plate 41 or housing 42 by thermal compounding, so that at a bonding surface of the gas-permeable film 44 and the cover plate 41 or housing 42, functional groups of the gas-permeable film 44 are bonded to functional groups of the cover plate 41, the housing 42, or the backing material 45 by chemical bonds, so that a strong connection force is obtained. In some embodiments, the gas-permeable film 44 may also be connected to the cover plate 41 or housing 42 by bonding.

With the above connection manner of thermal compounding or bonding, the connection manner between the gas-permeable film 44 and the cover plate 41 or housing 42 is simplified, and an additional connecting structure is omitted. Therefore, the manufacturing process is simplified and the manufacturing cost is reduced.

Referring to Figs. 4 to 7, a specific embodiment in which a plurality of through holes are provided is exemplarily shown. A battery cell 40 is provided. The battery cell 40 comprises a cover plate 41, a housing 42, an electrode assembly 43, and a gas-permeable film 44. The cover body 41 comprises a plurality of through holes 411 and a plurality of spacer portions 412 between the plurality of through holes 411. In Figs. 6 and 7, the cover body 41 and the plurality of spacer portions 412 thereof are indicated by a diagonal background, the plurality of through holes 411 are indicated by a white background, and the gas-permeable film 44 is indicated by a black background, where five vent holes 411 are exemplarily shown.

The gas-permeable film 44 is connected to the inside of the cover plate 41 and/or housing 42 by thermal compounding and/or bonding. The gas-permeable film 44 is connected to the cover plate 41 or housing 42 by thermal compounding, so that at a bonding surface of the gas-permeable film 44 and the cover plate 41 or housing 42, functional groups of the gas-permeable film 44 are bonded to functional groups of the cover plate 41, the housing 42, or the backing material 45 by chemical bonds, so that a strong connection force is obtained. In some embodiments, the gas-permeable film 44 may also be connected to the cover plate 41 or housing 42 by bonding.

Referring to Fig. 7, the minimum distance D0 from the edge of the gas-permeable film 44 to the edge, inside the cover plate 41 and/or housing 42, of the through hole that is closest to the edge of the gas-permeable film 44 from the plurality of through holes along the plane of the cover plate 41 or housing 42 is greater than or equal to 1.5 mm. The minimum distance D0 is set to ensure that when the gas pressure inside the battery cell 40 increases, and a pressure toward the outside of the battery cell 40 is generated on the gas-permeable film, the gas-permeable film 44 and the cover plate 41 or housing 42 can still remain connected, and the degree of deformation of the gas-permeable film 44 is within an acceptable range.

Referring to Fig. 13, a specific embodiment in which one through hole is provided is exemplarily shown. Fig. 13 only shows the specific structure at the through hole. Other parts other than the through hole, such as the cover plate, the housing, and the electrode assembly, may be the same as those in other embodiments.

In this embodiment, the through hole 411 may be divided into an extending section 4111 and an accommodating section 4112. The extending section 4111 is a cylinder with a bore-diameter of L11 and a height of H11, and the accommodating section 4112 is a cylinder with a bore-diameter of L12 and a height of H12. The accommodating section 4112 is closer to the inside of the battery cell 40 than the extending section 4111, and the accommodating section 4112 has a diameter greater than the diameter of the extending section 4111.

The accommodating section 4112 and the extending section 4111 shown in Fig. 13 are two coaxial cylinders. However, those skilled in the art can understand that when the accommodating section 4112 and the extending section 4111 each is a cylinder, the axes of the two may coincide or not coincide, may be parallel or not be parallel, as long as it is ensured that the through hole 41 composed of the accommodating section 4112 and the extending section 4111 can pass through the inside and outside of the battery cell 40. In addition, the accommodating section 4112 and the extending section 4111 may also have other regular or irregular shapes. When the accommodating section 4112 and the extending section 4111 have non-fixed bore-diameters, it is only necessary to ensure that the accommodating section 4112 has an average bore-diameter greater than the average bore-diameter of the extending section 4111.

With the above arrangement of the through hole 411, when the gas-permeable film 44 tends to deform outward under the action of the gas pressure inside the battery cell 40, the step-shaped reduced bore-diameter from the accommodating section 4112 to the extending section 4111 enables an hole wall to provide an additional support force to the backing material 45, which further increases the support force for the gas-permeable film 44, so that the gas-permeable film 44 is less prone to deformation. Of course, the gradually reduced bore-diameter from the accommodating section 4112 to the extending section 4111 can also provide the additional support force described above.

As shown in Fig. 13, the accommodating section 4112 and the extending section 4111 are filled with the backing material 45, the backing material 45 is indicated by a dot matrix background in Fig. 13, and the material of the backing material 45 is the same as that in the foregoing embodiments.

As shown in Fig. 13, a recess 46 is also provided on the inside of the cover plate 41. In the figure, the recess 46 is a cylinder with a height of H46 and a bore-diameter of L46. The recess 46 is provided around the through hole 411 and accommodates the gas-permeable film 44 therein. Those skilled in the art can understand that the recess 46 may also have other regular or irregular shapes, as long as it is provided around the through hole and can at least partially accommodate the gas-permeable film 44.

By providing the recess 46, the internal space of the battery cell 40 occupied by the gas-permeable film 44 can be reduced, the overall thickness of the cover plate 41 can be reduced, and it is also ensured that gas inside the battery cell 40 can be discharged to the outside of the battery cell 40 through the gas-permeable film that is at least partially accommodated in the recess 46.

Those skilled in the art can understand that the specific manner for providing the through hole 411 in the top cover 41 in the foregoing embodiments is also applicable to embodiments in which the through hole 411 is provided in each side surface or a bottom surface of the housing 42.

## Claims

1. A battery cell (40), comprising a cover plate (41), a housing (42), and a gas-permeable film (44), wherein:
the housing (42) has an opening and the cover plate (41) covers the opening of the housing (42);
the cover plate (41) and/or housing (42) have/has at least one through hole (411), and the inside and the outside of the battery cell (40) are in communication with each other via the through hole (411);
the gas-permeable film (44) is connected to the inside of the cover plate (41) and/or housing (42) and covers the at least one through hole (411);
the at least one through hole (411) comprises an accommodating section (4112) and an extending section (4111) in a direction perpendicular to the plane of the cover plate (41) or housing (42), the accommodating section (4112) having an average bore-diameter greater than the average bore-diameter of the extending section (4111), and the accommodating section (4112) being closer to the inside of the battery cell (40) than the extending section (4111);
the battery cell (40) further comprises a backing material (45), the backing material (45) being at least partially accommodated in the accommodating section (4112) and being contained in the through hole (411); and
the backing material (45) is made of a hydrophobic and gas-permeable material having a gas permeation volume greater than the gas permeation volume of the gas-permeable film (44), and/or having a melting point greater than the melting point of the gas-permeable film (44).

2. The battery cell (40) according to claim 1, wherein a recess (46) is provided on the inside of the cover plate (41) and/or housing (42), the recess (46) is provided around the at least one through hole (411), and the gas-permeable film (44) is at least partially accommodated in the recess (46).

3. The battery cell (40) according to claim 2, wherein a minimum distance (D0) from the edge of the gas-permeable film (44) to the edge, inside the cover plate (41) and/or housing (42), of the at least one through hole (411) along the plane of the cover plate (41) or housing (42) is greater than or equal to 1.5 mm.

4. The battery cell (40) according to claim 3, wherein, when a plurality of through holes (411) are provided, the plurality of through holes (411) are adjacently arranged in the plane of the cover plate (41) or housing (42).

5. The battery cell (40) according to claim 4, wherein the gas-permeable film (44) is connected to the inside of the cover plate (41) and/or housing (42) by thermal compounding or bonding.

6. A battery (201) comprising a battery cell (40) according to any one of claims 1-5.

7. A power consuming device comprising a battery (201) according to claim 6, the battery (201) being used to provide electrical energy.

8. A method for manufacturing a battery cell (40), the method comprising:
providing a cover plate (41), a housing (42), and a gas-permeable film (44), wherein the housing (42) has an opening;
covering the opening of the housing (42) with the cover plate (41);
providing at least one through hole (411) in the cover plate (41) and/or housing (42), the battery cell (40) being in communication with the outside via the through hole (411);
connecting the gas-permeable film (44) to the inside of the cover plate (41) and/or housing (42) with the at least one through hole (411) covered;
wherein
the at least one through hole (411) is configured to comprise an accommodating section (4112) and an extending section (4111) in a direction perpendicular to the plane of the cover plate (41) or housing (42), the accommodating section (4112) having an average bore-diameter greater than the bore-diameter of the extending section (4111), and the accommodating section (4112) being closer to the inside of the battery cell (40) than the extending section (4111);
a backing material (45) is provided, the backing material (45) being at least partially accommodated in the accommodating section (4112) and being contained in the through hole (411); and
the backing material (45) is made of a hydrophobic and gas-permeable material having a gas permeation volume greater than the gas permeation volume of the gas-permeable film (44), and/or having a melting point greater than the melting point of the gas-permeable film (44).

9. The method according to claim 8, wherein a recess (46) is provided on the inside of the cover plate (41) and/or housing (42), the recess (46) is provided around the at least one through hole (411), and the gas-permeable film (44) is at least partially accommodated in the recess (46).

10. The method according to claim 9, wherein a minimum distance (D0) from the edge of the gas-permeable film (44) to the edge, inside the cover plate (41) and/or housing (42), of the through hole (411) along the plane of the cover plate (41) or housing (42) is set to be greater than or equal to 1.5 mm.

11. The method according to claim 10, wherein, when a plurality of through holes (411) are provided, the plurality of through holes (411) are adjacently arranged in the plane of the cover plate (41) and/or housing (42); optionally the gas-permeable film (44) is connected to the inside of the cover plate (41) and/or housing (42) by thermal compounding or bonding.

## Patentansprüche

1. Batteriezelle (40), umfassend eine Abdeckplatte (41), ein Gehäuse (42) und eine gasdurchlässige Folie (44), wobei:
das Gehäuse (42) eine Öffnung aufweist und die Abdeckplatte (41) die Öffnung des Gehäuses (42) abdeckt;
die Abdeckplatte (41) und/oder das Gehäuse (42) mindestens ein Durchgangsloch (411) aufweist/aufweisen und die Innenseite und die Außenseite der Batteriezelle (40) über das Durchgangsloch (411) miteinander in Verbindung stehen;
die gasdurchlässige Folie (44) an der Innenseite der Abdeckplatte (41) und/oder des Gehäuses (42) verbunden ist und das mindestens eine Durchgangsloch (411) abdeckt;
das mindestens eine Durchgangsloch (411) einen Aufnahmeabschnitt (4112) und einen Verlängerungsabschnitt (4111) in einer Richtung senkrecht zur Ebene der Abdeckplatte (41) oder des Gehäuses (42) umfasst, wobei der Aufnahmeabschnitt (4112) einen durchschnittlichen Bohrungsdurchmesser aufweist, der größer als der durchschnittliche Bohrungsdurchmesser des Verlängerungsabschnitts (4111) ist, und der Aufnahmeabschnitt (4112) näher an der Innenseite der Batteriezelle (40) als der Verlängerungsabschnitt (4111) liegt;
die Batteriezelle (40) ferner ein Trägermaterial (45) umfasst, wobei das Trägermaterial (45) mindestens teilweise in dem Aufnahmeabschnitt (4112) aufgenommen und in dem Durchgangsloch (411) enthalten ist; und
das Trägermaterial (45) aus einem hydrophoben und gasdurchlässigen Material mit einem Gaspermeationsvolumen, das größer als das Gaspermeationsvolumen der gasdurchlässigen Folie (44) ist, und/oder mit einem Schmelzpunkt, der größer als der Schmelzpunkt der gasdurchlässigen Folie (44) ist, gebildet ist.

2. Batteriezelle (40) nach Anspruch 1, wobei eine Aussparung (46) an der Innenseite der Abdeckplatte (41) und/oder des Gehäuses (42) bereitgestellt ist, die Aussparung (46) um das mindestens eine Durchgangsloch (411) bereitgestellt ist und die gasdurchlässige Folie (44) mindestens teilweise in der Aussparung (46) aufgenommen ist.

3. Batteriezelle (40) nach Anspruch 2, wobei ein Mindestabstand (D0) von dem Rand der gasdurchlässigen Folie (44) zu dem Rand des mindestens einen Durchgangslochs (411) innerhalb der Abdeckplatte (41) und/oder des Gehäuses (42) entlang der Ebene der Abdeckplatte (41) oder des Gehäuses (42) größer oder gleich 1,5 mm ist.

4. Batteriezelle (40) nach Anspruch 3, wobei, wenn eine Vielzahl von Durchgangslöchern (411) bereitgestellt ist, die Vielzahl von Durchgangslöchern (411) in der Ebene der Abdeckplatte (41) oder des Gehäuses (42) benachbart zueinander angeordnet sind.

5. Batteriezelle (40) nach Anspruch 4, wobei die gasdurchlässige Folie (44) an der Innenseite der Abdeckplatte (41) und/oder des Gehäuses (42) durch thermisches Verbinden oder Verkleben verbunden ist.

6. Batterie (201), umfassend eine Batteriezelle (40) nach einem der Ansprüche 1-5.

7. Leistungsverbrauchende Vorrichtung, umfassend eine Batterie (201) nach Anspruch 6, wobei die Batterie (201) verwendet wird, um elektrische Leistung bereitzustellen.

8. Verfahren zur Herstellung einer Batteriezelle (40), wobei das Verfahren Folgendes umfasst:
Bereitstellen einer Abdeckplatte (41), eines Gehäuses (42) und einer gasdurchlässigen Folie (44), wobei das Gehäuse (42) eine Öffnung aufweist;
Abdecken der Öffnung des Gehäuses (42) mit der Abdeckplatte (41);
Bereitstellen von mindestens einem Durchgangsloch (411) in der Abdeckplatte (41) und/oder dem Gehäuse (42), wobei die Batteriezelle (40) über das Durchgangsloch (411) mit der Außenseite in Verbindung steht;
Verbinden der gasdurchlässigen Folie (44) an der Innenseite der Abdeckplatte (41) und/oder des Gehäuses (42) und/oder Abdecken des mindestens einen Durchgangslochs (411);
wobei
das mindestens eine Durchgangsloch (411) so konfiguriert ist, dass es einen Aufnahmeabschnitt (4112) und einen Verlängerungsabschnitt (4111) in einer Richtung senkrecht zur Ebene der Abdeckplatte (41) oder des Gehäuses (42) umfasst, wobei der Aufnahmeabschnitt (4112) einen durchschnittlichen Bohrungsdurchmesser aufweist, der größer als der Bohrungsdurchmesser des Verlängerungsabschnitts (4111) ist, und der Aufnahmeabschnitt (4112) näher an der Innenseite der Batteriezelle (40) als der Verlängerungsabschnitt (4111) liegt;
ein Trägermaterial (45) bereitgestellt ist, wobei das Trägermaterial (45) mindestens teilweise in dem Aufnahmeabschnitt (4112) aufgenommen und in dem Durchgangsloch (411) enthalten ist; und
das Trägermaterial (45) aus einem hydrophoben und gasdurchlässigen Material mit einem Gaspermeationsvolumen, das größer als das Gaspermeationsvolumen der gasdurchlässigen Folie (44) ist, und/oder mit einem Schmelzpunkt, der größer als der Schmelzpunkt der gasdurchlässigen Folie (44) ist, gebildet ist.

9. Verfahren nach Anspruch 8, wobei eine Aussparung (46) an der Innenseite der Abdeckplatte (41) und/oder des Gehäuses (42) bereitgestellt ist, die Aussparung (46) um das mindestens eine Durchgangsloch (411) bereitgestellt ist und die gasdurchlässige Folie (44) mindestens teilweise in der Aussparung (46) aufgenommen ist.

10. Verfahren nach Anspruch 9, wobei ein Mindestabstand (D0) von dem Rand der gasdurchlässigen Folie (44) zu dem Rand des Durchgangslochs (411) innerhalb der Abdeckplatte (41) und/oder des Gehäuses (42) entlang der Ebene der Abdeckplatte (41) oder des Gehäuses (42) auf einen Wert von größer oder gleich 1,5 mm festgelegt ist.

11. Verfahren nach Anspruch 10, wobei, wenn eine Vielzahl von Durchgangslöchern (411) bereitgestellt ist, die Vielzahl von Durchgangslöchern (411) in der Ebene der Abdeckplatte (41) und/oder des Gehäuses (42) benachbart zueinander angeordnet sind; optional die gasdurchlässige Folie (44) an der Innenseite der Abdeckplatte (41) und/oder des Gehäuses (42) durch thermisches Verbinden oder Verkleben verbunden wird.

## Revendications

1. Cellule de batterie (40) comprenant une plaque de couverture (41), un boîtier (42) et un film perméable aux gaz (44), dans laquelle :
le boîtier (42) comporte une ouverture et la plaque de couverture (41) recouvre l'ouverture du boîtier (42) ;
la plaque de couverture (41) et/ou le boîtier (42) comportent au moins un trou traversant (411), et l'intérieur et l'extérieur de la cellule de batterie (40) sont en communication l'un avec l'autre par l'intermédiaire du trou traversant (411) ;
le film perméable aux gaz (44) est relié à l'intérieur de la plaque de couverture (41) et/ou du boîtier (42) et recouvre le ou les trous traversants (411) ;
le ou les trous traversants (411) comprennent une section de logement (4112) et une section d'extension (4111) dans une direction perpendiculaire au plan de la plaque de couverture (41) ou du boîtier (42), la section de logement (4112) présentant un diamètre d'alésage moyen supérieur au diamètre d'alésage moyen de la section d'extension (4111), et la section de logement (4112) étant plus près de l'intérieur de la cellule de batterie (40) que la section d'extension (4111) ;
la cellule de batterie (40) comprend en outre un matériau de renfort (45), le matériau de renfort (45) étant logé au moins partiellement dans la section de logement (4112) et étant contenu dans le trou traversant (411) ; et
le matériau de renfort (45) est constitué d'un matériau hydrophobe et perméable aux gaz présentant un volume de perméation de gaz supérieur au volume de perméation de gaz du film perméable aux gaz (44), et/ou présentant un point de fusion supérieur au point de fusion du film perméable aux gaz (44).

2. La cellule de batterie (40) selon la revendication 1, dans laquelle un évidement (46) est disposé sur l'intérieur de la plaque de couverture (41) et/ou du boîtier (42), l'évidement (46) est disposé autour du ou des trous traversants (411), et le film perméable aux gaz (44) est logé au moins partiellement dans l'évidement (46).

3. La cellule de batterie (40) selon la revendication 2, dans laquelle une distance minimale (D0), à partir du bord du film perméable aux gaz (44) jusqu'au bord, à l'intérieur de la plaque de couverture (41) et/ou du boîtier (42), du ou des trous traversants (411) le long du plan de la plaque de couverture (41) ou du boîtier (42), est supérieure ou égale à 1,5 mm.

4. La cellule de batterie (40) selon la revendication 3, dans laquelle, lorsque plusieurs trous traversants (411) sont prévus, les plusieurs trous traversants (411) sont disposés adjacents dans le plan de la plaque de couverture (41) ou du boîtier (42).

5. La cellule de batterie (40) selon la revendication 4, dans laquelle le film perméable aux gaz (44) est relié à l'intérieur de la plaque de couverture (41) et/ou du boîtier (42) par compoundage ou assemblage thermique.

6. Batterie (201) comprenant une cellule de batterie (40) selon l'une quelconque des revendications 1-5.

7. Dispositif consommateur d'énergie comprenant une batterie (201) selon la revendication 6, la batterie (201) étant utilisée pour fournir de l'énergie électrique.

8. Procédé de fabrication d'une cellule de batterie (40), le procédé comprenant :
l'utilisation d'une plaque de couverture (41), d'un boîtier (42) et d'un film perméable aux gaz (44), le boîtier (42) comportant une ouverture ;
l'utilisation de la plaque de couverture (41) pour recouvrir l'ouverture du boîtier (42) ;
la disposition d'au moins un trou traversant (411) dans la plaque de couverture (41) et/ou dans le boîtier (42), la cellule de batterie (40) étant en communication avec l'extérieur par l'intermédiaire du trou traversant (411) ;
la liaison du film perméable aux gaz (44) à l'intérieur de la plaque de couverture (41) et/ou du boîtier (42), le ou les trous traversants (411) étant recouverts ;
dans lequel
le ou les trous traversants (411) sont conçus pour comprendre une section de logement (4112) et une section d'extension (4111) dans une direction perpendiculaire au plan de la plaque de couverture (41) ou du boîtier (42), la section de logement (4112) présentant un diamètre d'alésage moyen supérieur au diamètre d'alésage moyen de la section d'extension (4111), et la section de logement (4112) étant plus près de l'intérieur de la cellule de batterie (40) que la section d'extension (4111) ;
un matériau de renfort (45) est prévu, le matériau de renfort (45) étant logé au moins partiellement dans la section de logement (4112) et étant contenu dans le trou traversant (411) ; et
le matériau de renfort (45) est constitué d'un matériau hydrophobe et perméable aux gaz présentant un volume de perméation de gaz supérieur au volume de perméation de gaz du film perméable aux gaz (44), et/ou présentant un point de fusion supérieur au point de fusion du film perméable aux gaz (44).

9. Le procédé selon la revendication 8, dans lequel un évidement (46) est disposé sur l'intérieur de la plaque de couverture (41) et/ou du boîtier (42), l'évidement (46) est disposé autour du ou des trous traversants (411), et le film perméable aux gaz (44) est logé au moins partiellement dans l'évidement (46).

10. Le procédé selon la revendication 9, dans lequel une distance minimale (D0), à partir du bord du film perméable aux gaz (44) jusqu'au bord, à l'intérieur de la plaque de couverture (41) et/ou du boîtier (42), du trou traversant (411) le long du plan de la plaque de couverture (41) ou du boîtier (42), est réglée de façon à être supérieure ou égale à 1,5 mm.

11. Le procédé selon la revendication 10, dans lequel, lorsque plusieurs trous traversants (411) sont prévus, les plusieurs trous traversants (411) sont disposés adjacents dans le plan de la plaque de couverture (41) et/ou du boîtier (42) ; éventuellement, le film perméable aux gaz (44) est relié à l'intérieur de la plaque de couverture (41) et/ou du boîtier (42) par compoundage ou assemblage thermique.
